# EUROPÄISCHE PATENTSCHRIFT

(11) **EP 0 617 739 B1**
(45) Veröffentlichungstag und Bekanntmachung des Hinweises auf die Patenterteilung: **15.04.1998**
(21) Anmeldenummer: 93924422.4
(22) Anmeldetag: 19.10.1993
(51) Int. Cl.: C21C 5/56, C21B 13/02

(54) **VERFAHREN ZUM KONTINUIERLICHEN EINSCHMELZEN VON SCHROTT**
METHOD FOR CONTINUOUSLY MELTING DOWN SCRAP METAL
PROCEDE DE FUSION CONTINUE DE FERRAILLE

(30) Priorität: 19.10.1992 AT 2062/92
(43) Veröffentlichungstag der Anmeldung: 05.10.1994
(73) Patentinhaber: VOEST-ALPINE INDUSTRIEANLAGENBAU GMBH, 4020 Linz (AT); DAIMLER-BENZ AKTIENGESELLSCHAFT, 70567 Stuttgart (DE)
(72) Erfinder: NIEDER, Wolfgang, A-4040 Linz (AT); WINKLER, Manfred, A-4501 Neuhofen (AT); PERCHTOLD, Gerhard, A-1050 Wien (AT); SEIRLEHNER, Leo, A-4040 Linz (AT); KOHLER, Herbert, D-7014 Kornwestheim (DE); EBERLE, Arwed, D-7410 Reutlingen (DE)
(74) Vertreter: Haffner, Thomas M., Dr.
(86) Internationale Anmeldenummer: AT9300158
(87) Internationale Veröffentlichungsnummer: WO9409163

(56) Entgegenhaltungen:
- EP-A- 0 304 413
- EP-A- 0 470 066
- DE-B- 2 504 889
- DE-C- 657 781
- US-A- 3 529 067

## Beschreibung

Die Erfindung bezieht sich auf ein Verfahren zum kontinuierlichen Einschmelzen von Schrott, insbesondere von Schrottpaketen, die Restkunststoffe enthalten, wobei der Schrott einem Einschmelzreaktor aufgegeben wird und die Schmelzwärme durch direkte Beheizung von unten über nahe dem Abstich angeordneten Brenner aufgebracht wird, wobei die Prozeßführung im Einschmelzreaktor reduzierend vorgenommen wird.

Aus der DE-PS 25 04 889 ist es bereits bekanntgeworden, einen Schachtofen zum Einschmelzen von Schrott zu verwenden, bei dem die Einsatzmaterialsäule von unten durch Brenner beheizt wird. Die in dem Schachtofen zur direkten Beheizung vorgesehene Brennstoff-Sauerstoff-Verbrennung wurde hierbei so geführt, daß durch Zusatz großer Kohlestücke zum Einsatzmaterial ein reduzierender Bereich unterhalb der oxidierenden Einschmelzzone geschaffen wird. Insbesondere bei Verwertung von organisch belasteten Schrottsorten, wie sie beispielsweise bei der Entsorgung von Kraftfahrzeugen anfallen, oder bei Einsatzmaterialien, die durch Verpressen zu Schrottpaketen, beispielsweise aus Autos, gewonnen werden, sind in der Regel relativ große Kunststoffanteile im Einsatzmaterial enthalten, die zu einer relativ hohen Schadstoffbelastung der Abgase führen.

Ein ähnliches Verfahren, bei dem Schrott od.dgl. durch Einbringen von Schmelzwärme mittels Brennern von unten her geschmolzen und ein Kohlenstoffgehalt im Schmelzbad durch unterstöchiometrische Verbrennung von Kohlenwasserstoff eingestellt wird, ist beschrieben in EP-A-304 413.

Durch die Beheizung von Einschmelzreaktoren mittels Brennern entstehen beträchtliche Gasmengen, die mit den organischen und anorganischen Schadstoffen, insbesondere bei den genannten Einsatzmaterialien, belastet würden, so daß eine aufwendige und für sehr große Volumina ausgelegte Gasreinigung erforderlich wird.

Die Erfindung zielt nun darauf ab, ein Verfahren der eingangs genannten Art dahingehend weiterzubilden, daß auch kunststoffhältiger Schrott, insbesondere Schrottpakete, wie sie bei der Entsorgung von Kraftfahrzeugen anfallen, eingeschmolzen werden können, ohne daß hierfür eine überdimensionierte Gasreinigung vorgesehen werden muß. Gleichzeitig zielt die Erfindung darauf ab, die im Einsatzmaterial enthaltenen pyrolisierten Substanzen nutzbringend wiederzuverwenden und den energetischen und anlagetechnischen Aufwand der Anlage entsprechend zu minimieren. Zur Lösung dieser Aufgabe besteht die Erfindung beim eingangs erwähnten Verfahren im wesentlichen darin, daß ein Teil der Prozeßgase nach Ausnutzung der fühlbaren Warme und Reinigung als Brenngas in den Einschmelzreaktor rückgeführt wird und daß der restliche Anteil als Exportgas ausgebracht wird. Durch die reduzierende Fahrweise im Inneren des Einschmelzreaktors wird sichergestellt, daß ein Prozeßgas zur Verfügung gestellt wird, welches neben fühlbarer Wärme auch einen hohen Anteil an chemisch gebundener Wärme aufweist. Die reduzierende Führung im Einschmelzreaktor bietet die Möglichkeit, als Prozeßgas ein Brenngas zu erhalten, welches in der Folge substitutiv für die für den Anfahrbetrieb des Schmelzreaktors einzusetzenden Brenngase Verwendung finden kann. Bei geeigneter Führung und entsprechender Wahl der Einsatzmaterialien läßt sich eine autotherme Führung des Prozesses ermöglichen, wobei die reduzierende Führung des Prozesses im Einschmelzreaktor dann eine derartige vollständige autotherme Prozeßführung ermöglicht, wenn, wie es einer bevorzugten Weiterbildung entspricht, als Einsatzmaterial in den Schmelzreaktor Schrottsorten mit einem chemisch gebundenen Energieinhalt von > 0,6 kWh.t⁻¹ eingesetzt wird.

Eine weitere Verbesserung der Energiebilanz läßt sich dadurch erzielen, daß die fühlbare Wärme der Abgase zur Vorwärmung der in den Einschmelzreaktor rückgeführten Brenngase genutzt wird. Eine derartige Vorwärmung der rückzuführenden Brenngase erlaubt es, auch minderwertiges Brenngas zur Aufrechterhaltung der gewünschten Verfahrensparameter im Innern des Einschmelzreaktors sicherzustellen.

Der anlagentechnische Aufwand bei gleichzeitiger Verringerung des energetischen Aufwandes wird dadurch wesentlich herabgesetzt, daß die abgezogenen Prozeßgase zu mehr als 20 Vol.-% als erwärmtes Brenngas nach einer Reinigung, insbesondere einer HCl-Waschung und SO₂-/H₂S-Abscheidung, in den Einschmelzreaktor rückgeführt werden und der verbleibende Teil als Exportas abgezogen wird.

Der verbleibende Teil des Prozeßgases wird als Exportgas abgezogen. Eine derartige Fahrweise mit einer Kreislaufführung erlaubt es, die Einrichtungen für die Reinigung der Prozeßgase wesentlich zu verringern, wobei mit Vorteil das Verfahren so geregelt wird, daß der CO-Gehalt der Prozeßgase aus dem Schmelzreaktor durch unterstöchiometrische O₂-Gaszufuhr auf 30 bis 40 Vol.-%, insbesondere etwa 36 Vol.-%, eingestellt wird. Eine derartige Verfahrensführung mit einem CO-Gehalt zwischen 30 und 40 Vol.-% erlaubt es, ein rückzuführendes Prozeßgas bzw. Brenngas für einen autothermen Prozeß zur Verfügung zu stellen, welches sich durch einen Heizwert von 1,5 bis 2 kWh.m⁻³n auszeichnet.

Mit Vorteil wird das Verfahren daher so geführt, daß das den rückgeführten Anteil der Prozeßgase übersteigende Exportgas mit einem Heizwert von 1,5 bis 2 kWh.m⁻³n nach adsorptiver Reinigung ausgebracht wird. Ein derartiger Heizwert erlaubt eine problemlose Rückführung in den Schmelzreaktor und dadurch eine Minimierung des energetischen Aufwandes an zusätzlichen Primärenergieträgern.

Um insbesondere ein Exportgas mit noch höherem Wert zu gewinnen oder eine autotherme Betriebsweise auch dann zu ermöglichen, wenn das Einsatzmaterial einen zu geringen, chemisch gebundenen Energieinhalt aufweist, wird mit Vorteil das Verfahren so durchgeführt, daß das Prozeßgas, insbesondere das Exportgas, über einem Koksbettreaktor auf einen Heizwert von 3,0 bis 3,5 kwh.m⁻³n, insbesondere 3,3 kwh.m⁻³n, eingestellt wird.

Eine besonders vorteilhafte Reinigung der Prozeßabgase läßt sich dadurch erzielen, daß die Prozeßgase über einen mit Koks und Kalk betriebenen Mischgettadsorber geführt werden und das beladene Adsorbens in den Einschmelzreaktor rückgeführt wird. Auf diese Weise wird sichergestellt, daß die Ausschleusung des in das System eingebrachten Schwefels über den Schlackenweg erfolgt, so daß insbesondere die unerwünschte Produktion überflüssiger zusätzlicher Nebenprodukte, wie beispielsweise von chlorid- und fluoridhältigen Gips, entfallen kann.

Eine einfache und wirkungsvolle Reinigung der Prozeßabgase kann dadurch erfolgen, daß die Prozeßabgase über einen Grobabscheider, vorzugsweise Heißgaszyklon einem Thermoreaktor zugeführt werden und anschließend einem Wärmetauscher für die Erwärmung des im Kreislauf rückzuführenden Brenngases zugeführt werden, wobei das Prozeßgas vor einer physikalischen und chemischen Reinigung nach Vorwärmung der rückgeführten Brenngase zur Prozeßdampferzeugung genutzt werden kann. Eine derartige Verfahrensführung erlaubt es, das am Kopf des Schmelzreaktors abgezogene Produktgas bzw. Prozeßgas nach der Grob-Entstaubung in einem Thermoreaktor über eine gewünschte hinreichend lange Reaktionszeit zu halten, um die gewünschten chemischen Umsetzungen und insbesondere die Ausbildung eines Gleichgewichtes sicherzustellen, worauf im Anschluß über einen Wärmetauscher die Ausnutzung der fühlbaren Wärme für die Vorwärmung der rückgeführten Brenngasmenge erfolgen kann.

In einer nachgeschalteten Gasreinigungsstufe kann in konventioneller Weise prozeßbedingter Staub mittels Elektrofilter abgeschieden, in der Folge Chlor-/Flourwasserstoff ausgewaschen und ein von den Halogenwasserstoffen weitgehend freies Brenngas nach einer nachgeschalteten H₂S- und SO₂-Adsorption für die Rückführung als Schmelzenergieträger bzw. zur Nutzung als Exportgas bereitgestellt werden.

Die Brenner, die sich nahe am Abstich des Einschmelzreaktors befinden, werden zumindest teilweise mit den gereinigten Prozeßgasen betrieben, wobei mit Vorteil den Brennern 20 bis 30 Vol.-% des gereinigten Prozeßgases zugeführt wird. Das im Kreislauf geführte Prozeßgas wird mit Vorteil vor Eintritt in die Brenner durch eine Gegenstromerwärmung mit den Prozeßabgasen auf eine Temperatur zwischen 500 und 700°C, vorzugsweise auf eine Temperatur von etwa 600°C, vorgewärmt, wodurch der Aufwand für die Erbringung der erforderlichen Schmelzwärme so weit reduziert wird, daß eine externe Zufuhr von Brenngasen, beispielsweise Erdgas, in der Folge, d.h. nach dem Anfahren, entfallen kann.

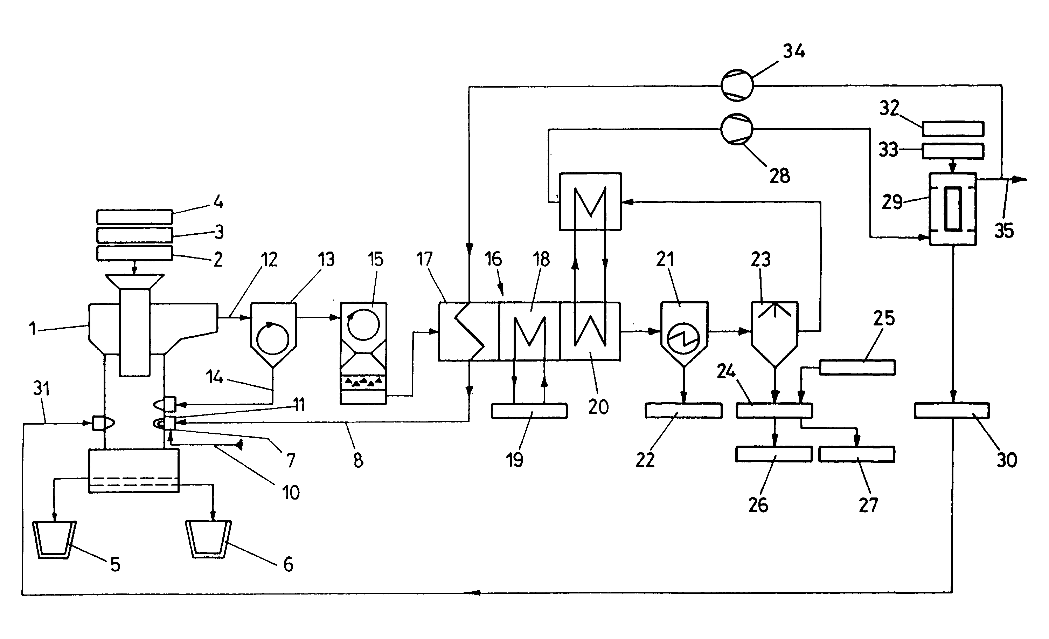

Die Erfindung wird nachfolgend anhand eines in der Zeichnung schematisch dargestellten Ausführungsbeispieles einer für die Durchführung der erfindungsgemäßen Verfahrens geeigneten Vorrichtung näher erläutert.

In der Zeichnung ist ein Einschmelzreaktor 1 dargestellt, welchem neben metallischen Einsatzmaterialien 2, beispielsweise Schrott, welcher Restkunststoffe enthält, Koks 3 und Kalk 4 zugegeben wird. Aus dem Einschmelzreaktor 1 wird im unteren Bereich Schlacke 5 sowie flüssiges Metall 6 abgezogen. Die mögliche Aufkohlung der metallischen Schmelze auf einen Kohlenstoffgehalt von etwa 3 % erfordert dabei eine Kokszugabe von etwa 60 kg.t⁻¹ (auf flüssiges Metall bezogen), welche jedoch in Abhängigkeit von den metallischen Einsatzstoffen variieren kann.

Die Schmelzwärme im Einschmelzreaktor 1 wird über eine direkte Beheizung von unten im unteren Bereich über Brenner 7 aufgebracht, welche nach einer Einlaufphase bzw. Startphase weitestgehend mit über eine Leitung 8 rückgeführten und gereinigten Prozeßgasen gemeinsam mit einer Sauerstoffzufuhr 10 gespeist werden. Die Zufuhr von Sauerstoff (berechnet mit 90 %-iger Reinheit) erfolgt dabei bei einer Temperatur von etwa 100°C. Für die Startphase bzw. Anlaufphase oder für den Fall, daß der Heizwert des rückgeführten Prozeßgases für einen autothermen Betrieb nicht ausreicht, wird den Brennern ein zusätzliches Brenngas, beipielsweise Erdgas, zugeführt, wie dies schematisch mit 11 angedeutet ist.

Am Kopf des Einschmelzreaktors 1 wird über eine Leitung 12 Prozeßgas abgezogen und einem Grobabscheider, vorzugsweise Heißgaszyklon 13, zugeführt, in welchem eine erste Staubabscheidung erfolgt, wobei der abgeschiedene Staub über die Leitung 14 dem Einschmelzreaktor rückgeführt wird.

Aus dem Heißgaszyklon 13 gelangt das Prozeßgas in einen Thermoreaktor 15 und wird aus diesem mit einer Temperatur von etwa 1000°C einem mehrstufigem Wärmetauscher 16 zugeführt, wobei in einer ersten Stufe 17 in einem Gegenstromwärmetauscher das rückzuführende und gereinigte Brenngas, welches über die Leitung 8 den Brennern 7 zugeführt wird, von einer Temperatur von ca. 90°C auf etwa 600°C vorgewärmt wird. Das im wesentlichen ungereinigte Prozeßgas wird dabei von etwa 1000°C auf ca. 900°C abgekühlt. In einem nachgeschalteten Abhitzekessel 18 wird ein Großteil der fühlbaren Wärme des Prozeßgases zur Erzeugung von Prozeßdampf genutzt, wie dies mit 19 angedeutet ist, wobei eine Abkühlung des Gases auf etwa 300°C erfolgt. In einem weiteren beispielsweise als Thermoölwärmetauscher ausgebildeten Kreislauf 20 erfolgt eine weitere Abkühlung des Prozeßgases, bevor dieses einem Elektrofilter 21 zugeführt wird, aus welchem wiederum Staub 22 abgeschieden wird. Anschließend gelangt das Prozeßgas in einen HCl-Wäscher 23, in welchem Chlor- und Fluorwasserstoffe zu etwa 95 % abgeschieden werden. Für die Reinigung des Abwassers aus dem HCl-Wäscher 23 wird einer Abwasser-Reinigungsanlage 24 30 %-ige bzw. 50 %-ige Natronlauge 25 zugesetzt, wobei aus dieser Reinigungsanlage NaCl-Granulat 26 sowie ein Filterkuchen 27 ausgebracht wird.

Anschließend an den HCl-Wäscher 23 wird das Prozeßgas über den Wärmetauscher 20 auf eine Temperatur von ca. 90°C vorgewärmt und anschließend in einem Ventilator 28 verdichtet, bevor es einem Wanderbettadsorber 29 zugeführt wird. In diesem Wanderbettadsorber erfolgt insbesondere eine Abscheidung von H₂S, SO₂ und von schweren Metallen sowie eine Restabscheidung von HCl und HF. Das aus dem Wanderbettadsorber 29 abgezogene und beladene Adsorbens, welches vom Kalk und Koks gebildet wird und schematisch mit 30 angedeutet ist, wird über eine Leitung 31 dem Einschmelzreaktor 1 rückgeführt. Die im Wanderbett-bzw. Mischbettadsorber 29 eingesetzten Stoffe Koks und Kalk sind dabei mit 32 und 33 angedeutet. Durch die Rückführung des mit Schwefel beladenen Adsorbens 30 in den Einschmelzreaktor wird der Schwefel vorwiegend in der Schlacke gebunden, wodurch im Gasreinigungsprozeß keine schwefelhältigen Abfall- und Beiprodukte, wie z.B. REA-Gips, anfallen.

Das aus dem Adsorber 29 abgezogene gereinigte Prozeßgas wird teilweise, beispielsweise in einer Menge von etwas mehr als 20 Vol.-%, in einem weiteren Ventilator 34 nochmals verdichtet und, wie oben bereits angedeutet, im Gegenstromwärmetauscher 17 auf eine Temperatur von etwa 600°C vorgewärmt, bevor es über die Brenner 7 wiederum dem Einschmelzreaktor zugeführt wird.

Der nicht in den Einschmelzreaktor rückgeführte Anteil des gereinigten Prozeßgases wird bei 35 als Exportgas abgezogen.

Insgesamt verläuft der Prozeß, abgesehen von einer gewissen Einlauf- bzw. Startphase, weitgehend autotherm dadurch, daß ein Teil des gereinigten Reduktions- bzw. Prozeßgases rückgeführt wird, so daß auf einen Einsatz von zusätzlichen Brenngasen verzichtet werden kann. Die für die Erzeugung der metallischen Schmelze im Schmelzreaktor 1 benötigte Energie wird somit einerseits aus dem im metallischen Einsatz bzw. Schrott enthaltenen organischen Anteil und andererseits aus dem aufgrund von Kohlenstoff-Abbrandreaktionen nicht für die Aufkohlung verwertbaren Koks gewonnen. Der Heizwert des produzierten Exportgases ist unter anderem abhängig vom organischen Müllanteil bzw. Kunststoffanteil im eingesetzten Schrott. Bei einer Schrottzufuhr, welche vorwiegend aus paketiertem Kraftfahrzeugen mit einem organischen Anteil von etwa 20 % besteht, liegt der Heizwert des durch den beschriebenen Prozeß erzeugten Prozeß- bzw. Exportgases bei etwa 2,0 kWh.m⁻³n. Für eine Anhebung des Heizwertes des Exportgases kann dieses über einen nicht näher dargestellten Koksbettreaktor geführt werden.

Das Verfahren im Einschmelzreaktor wird reduzierend, d.h. unterstöchiometrisch derart geführt, daß das Exportgas beim Austritt aus dem Reaktor einen CO-Gehalt von etwa 30 bis 40 Vol.-%, vorzugsweise etwa 36 Vol.-% enthält.

Insgesamt wird sowohl die fühlbare als auch die chemisch gebundene Wärme des Prozeßgases ausgenutzt, wobei die Nutzung der chemisch gebundenen Wärme über das rückgeführte Abgas in den Einschmelzprozeß erfolgt. Die thermische Nutzung erfolgt hierbei durch Verbrennung des rückgeführten Gases bei gleichzeitiger Sauerstoff-Zufuhr in den Brennern 7.

## Patentansprüche

1. Verfahren zum kontinuierlichen Einschmelzen von Schrott, insbesondere von Schrottpaketen, die Restkunststoffe enthalten, wobei der Schrott einem Einschmelzreaktor (1) aufgegeben wird und die Schmelzwärme durch direkte Beheizung von unten über nahe dem Abstich angeordneten Brenner (7) aufgebracht wird, wobei die Prozeßführung im Einschmelzreaktor (1) reduzierend vorgenommen wird, dadurch gekennzeichnet, daß ein Teil der Prozeßgase nach Ausnutzung der fühlbaren Wärme und Reinigung als Brenngas in den Einschmelzreaktor (1) rückgeführt wird und daß der restliche Anteil als Exportgas ausgebracht wird.

2. Verfahren nach Anspruch 1, dadurch gekennzeichnet, daß die abgezogenen Prozeßgase zu mehr als 20 Vol.-% als erwärmtes Brenngas nach einer Reinigung, insbesondere einer HCl-Waschung und SO₂-/H₂S-Abscheidung, in den Einschmelzreaktor (1) rückgeführt werden und der verbleibende Teil als Exportgas abgezogen wird.

3. Verfahren nach Anspruch 1 oder 2, dadurch gekennzeichnet, daß die fühlbare Wärme der Abgase zur Vorwärmung der in den Einschmelzreaktor (1) rückgeführten Brenngase genutzt wird.

4. Verfahren nach Anspruch 1, 2 oder 3, dadurch gekennzeichnet, daß der CO-Gehalt der Prozeßgase aus dem Schmelzreaktor durch unterstöchiometrische O₂-Gaszufuhr auf 30 bis 40 Vol.-%, insbesondere etwa 36 Vol.-%, eingestellt wird.

5. Verfahren nach einem der Ansprüche 1 bis 4, dadurch gekennzeichnet, daß das den rückgeführten Anteil der Prozeßgase übersteigende Exportgas mit einem Heizwert von 1,5 bis 2 kWh.m ³n nach adsorptiver Reinigung ausgebracht wird.

6. Verfahren nach einem der Ansprüche 1 bis 5, dadurch gekennzeichnet, daß das Prozeßgas, insbesondere das Exportgas, über einem Koksbettreaktor (15) auf einen Heizwert von 3,0 bis 3,5 kWh.m⁻³n, insbesondere 3,3 kWh.m⁻³n, eingestellt wird.

7. Verfahren nach einem der Ansprüche 1 bis 6, dadurch gekennzeichnet, daß als Einsatzmaterial (2) in den Schmelzreaktor (1) Schrottsorten mit einem chemisch gebundenen Energieinhalt von > 0,6 kWh.t⁻¹ eingesetzt wird.

8. Verfahren nach einem der Ansprüche 1 bis 7, dadurch gekennzeichnet, daß die Prozeßgase über einen mit Koks (32) und Kalk (33) betriebenen Mischbettadsorber (29) geführt werden und das beladene Adsorbens in den Einschmelzreaktor (1) rückgeführt wird.

9. Verfahren nach einem der Ansprüche 1 bis 8, dadurch gekennzeichnet, daß die Prozeßabgase über einen Grobabscheider, vorzugsweise Heißgaszyklon (13), einem Thermoreaktor (15) zugeführt werden und anschließend einem Wärmetauscher (16) für die Erwärmung des im Kreislauf rückzuführenden Brenngases zugeführt werden.

10. Verfahren nach einem der Ansprüche 1 bis 9, dadurch gekennzeichnet, daß das im Kreislauf geführte Prozeßgas vor Eintritt in die Brenner (7) durch eine Gegenstromerwärmung mit den Prozeßgasen auf eine Temperatur zwischen 500 und 700°C, insbesondere etwa 600°C, vorgewärmt wird.

## Claims

1. A process for continuously melting scrap and, in particular, scrap bales containing residual synthetic substances, wherein the scrap is charged into a meltdown reactor (1) and the melting heat is applied by direct heating from below via burners (7) arranged near the tap and wherein process control in the meltdown reactor (1) is effected in a reducing manner, characterized in that a portion of the process gases, after utilization of the sensible heat and purification, is recycled into the meltdown reactor (1) as a combustion gas and the remaining portion is delivered as an export gas.

2. A process according to claim 1, characterized in that the process gases drawn off are recycled into the meltdown reactor (1) as heated combustion gases by more than 20 % by volume after purification and, in particular, HCl scrubbing and SO₂/H₂S separation and the remaining portion is drawn off as an export gas.

3. A process according to claim 1 or 2, characterized in that the sensible heat of the offgases is utilized for preheating the combustion gases recycled into the meltdown reactor (1).

4. A process according to claim 1, 2 or 3, characterized in that the CO content of the process gases from the meltdown reactor is adjusted to 30 to 40 % by volume and, in particular, about 36 % by volume by understoichiometric O₂ gas feeding.

5. A process according to any one of claims 1 to 4, characterized in that the export gas exceeding the recycled portion of the process gases after adsorptive purification is discharged at a calorific value of between 1.5 and 2 kWh.m⁻³n.

6. A process according to any one of claims 1 to 5, characterized in that the process gas and, in particular, the export gas is adjusted to a calorific value of between 3.0 and 3.5 kwh.m⁻³n and, in particular, 3.3 kwh.m⁻³n above a coke bed reactor (15).

7. A process according to any one of claims 1 to 6, characterized in that scrap grades having chemically bound energy contents of > 0.6 kwh.t⁻¹ are introduced into the meltdown reactor (1) as charging materials (2).

8. A process according to any one of claims 1 to 7, characterized in that the process gases are conducted over a mixed bed adsorber (29) operated with coke (32) and lime (33) and the loaded adsorbent is recycled into the meltdown reactor (1).

9. A process according to any one of claims 1 to 8, characterized in that the process offgases are fed to a thermoreactor (15) via a coarse separator and, in particular, a hot gas cyclone (13) and subsequently are fed to a heat exchanger (16) for heating the combustion gas to be recirculated.

10. A process according to any one of claims 1 to 9, characterized in that the process gas conducted in circulation is preheated to a temperature of between 500 and 700°C and, in particular, about 600°C by countercurrent heating with the process gases before entering the burners (7).

## Revendications

1. Procédé de refusion continue de ferraille, en particulier de paquets de ferraille contenant des restes de matière plastique, dans lequel on introduit la ferraille dans un réacteur de refusion (1) et on apporte la chaleur de refusion par chauffage direct par le bas au moyen de brûleurs (7) disposés près de l'emplacement de coulée, la conduite du processus dans le réacteur de refusion (1) étant effectuée de manière réductrice, caractérisé en ce qu'une partie des gaz du processus, après utilisation de la chaleur sensible et épuration, est recyclée en tant que gaz de combustion dans le réacteur de refusion (1), et en ce que le reste des gaz du processus est évacué en tant que gaz exporté.

2. Procédé suivant la revendication 1, caractérisé en ce que les gaz du processus soutirés sont recyclés dans le réacteur de refusion (1) dans une proportion pouvant aller jusqu'à plus de 20% en volume, en tant que gaz de combustion chauffé, après une épuration, en particulier un lavage à l'acide chlorhydrique, et une séparation de SO₂/H₂S, le reste étant évacué en tant que gaz exporté.

3. Procédé suivant la revendication 1 ou 2, caractérisé en ce que la chaleur sensible des gaz effluents est utilisée pour préchauffer les gaz de combustion recyclés dans le réacteur de refusion (1).

4. Procédé suivant la revendication 1, 2 ou 3, caractérisé en ce qu'on règle la teneur en CO des gaz du processus sortant du réacteur de refusion à 30 à 40% en volume, en particulier à environ 36% en volume, par introduction d'oxygène sous-stoechiométrique.

5. Procédé suivant l'une des revendications 1 à 4, caractérisé en ce que le gaz exporté en excès de la fraction recyclée des gaz du processus est évacué avec une valeur calorifique de 1,5 à 2 kWh/Nm³.

6. Procédé suivant l'une des revendications 1 à 5, caractérisé en ce que le gaz du processus, en particulier le gaz exporté, est réglé à une valeur calorifique de 3,0 à 3,5 kWh/Nm³, en particulier à 3,3 kWh/Nm³, par l'intermédiaire d'un réacteur à lit de coke (15).

7. Procédé suivant l'une des revendications 1 à 6, caractérisé en ce que, en tant que matériau de départ (2), on introduit dans le réacteur de refusion (1) des types de ferrailles dont l'énergie liée chimiquement est supérieure à 0,5 kWh/t.

8. Procédé suivant l'une des revendications 1 à 7, caractérisé en ce que les gaz du processus sont conduits à travers un adsorbeur à lit mélangé (29) fonctionnant au coke (32) et à la chaux (33), et en ce que l'adsorbant chargé est recyclé dans le réacteur de refusion (1).

9. Procédé suivant l'une des revendications 1 à 8, caractérisé en ce que les gaz effluents du processus sont amenés à un réacteur thermique (15) par l'intermédiaire d'un séparateur grossier, de préférence un cyclone à gaz chauds (13), puis sont amenés à un échangeur de chaleur (16) pour le chauffage du gaz de combustion recyclé.

10. Procédé suivant l'une des revendications 1 à 9, caractérisé en ce que le gaz du processus recyclé est préchauffé à une température comprise entre 500 et 700°C, en particulier d'environ 600°C, avant de pénétrer dans les brûleurs (7), par chauffage à contre-courant avec les gaz du processus.
